# EUROPEAN PATENT APPLICATION

(11) **EP 4 195 105 A1**
(43) Date of publication of application: **14.06.2023**
(21) Application number: 22204887.8
(22) Date of filing: 01.11.2022
(51) Int. Cl.: G06N 3/0495, G06N 3/044, G06N 3/045, G06N 3/084, G06N 3/048

(54) **SYSTEM AND METHOD OF USING NEUROEVOLUTION-ENHANCED MULTI-OBJECTIVE OPTIMIZATION FOR MIXED-PRECISION QUANTIZATION OF DEEP NEURAL NETWORKS**

(30) Priority: 07.12.2021 US 202117544506
(71) Applicant: INTEL Corporation, Santa Clara, CA 95054 (US)
(72) Inventor: Miret, Santiago, Oakland, 94612 (US); Chua, Vui Seng, Hillsboro, 97124 (US); Marder, Mattias, 32716 Haifa (IL); Phielipp, Mariano J., Mesa, 85202 (US); Jain, Nilesh, Portland, 97229-9411 (US); Majumdar, Somdeb, Mission Viejo, 92692 (US)
(74) Representative: Goddar, Heinz J.

(57) **Abstract**

An apparatus is provided to use NEMO search to train GNNs that can be used for mixed-precision quantization of DNNs. For example, the apparatus generates a plurality of GNNs. The apparatus further generates a plurality of new GNNs based on the plurality of GNNs. The apparatus also generates a sequential graph for a first DNN. The first DNN includes a sequence of quantizable operations, each of which includes quantizable parameters and is represented by a different node in the sequential graph. The apparatus inputs the sequential graph into the GNNs and new GNNs and evaluates outputs of the GNNs and new GNNs based on conflicting objectives of reducing precisions of the quantizable parameters of the first DNN. The apparatus then selects a GNN from the GNNs and new GNNs based on the evaluation. The GNN is to be used for reducing precisions of quantizable parameters of a second DNN.

## Description

### Technical Field

This disclosure relates generally to deep neural networks (DNNs), and more specifically, to using Neuroevolutionary-Enhanced Multi-objective Optimization (NEMO) for mixed-precision quantization of DNNs.

### Background

A DNN takes in an input, assigns importance (learnable weights and biases) to various aspects/objects in the input, and generates an output. DNNs are used extensively for a variety of artificial intelligence applications ranging from computer vision to speech recognition and natural language processing. However, many DNNs are too big to fit in systems having limited computing resources, e.g., limited memory or limited processing power.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an architecture of an example DNN, in accordance with various embodiments.
FIG. 2 illustrates a deep learning (DL) environment, in accordance with various embodiments.
FIG. 3 is a block diagram of a DNN system, in accordance with various embodiments.
FIG. 4 is a block diagram of a compression module, in accordance with various embodiments.
FIG. 5 illustrates a sequential graph of a DNN, in accordance with various embodiments.
FIG. 6 illustrates offspring production in a NEMO search process, in accordance with various embodiments.
FIG. 7 illustrates an example Pareto frontier formed in a NEMO search process, in accordance with various embodiments.
FIG. 8 illustrates formation of a new generation in a NEMO search process, in accordance with various embodiments.
FIG. 9 illustrates a process of using a graph neural network (GNN) for mixed-precision quantization, in accordance with various embodiments.
FIG. 10 is a flowchart showing a method of optimizing multiple objectives of mixed-precision quantization, in accordance with various embodiments.
FIG. 11 is a block diagram of an example computing device, in accordance with various embodiments.

### Detailed Description

### Overview

Model quantization is a widely used technique to compress and accelerate DNNs across a variety of hardware platforms. In many real-time machine learning applications (such as robotics, autonomous driving, and mobile virtual/augmented reality), DNNs are constrained by the latency, energy, and model size. Various technologies have been developed to improve the hardware efficiency, such as designing efficient models, pruning filter, quantizing weights and activations to low precision, and so on. Many quantization methods apply equal bit-width precisions to all layers, but as different layers have different redundancy and behave differently on the hardware (computation bounded or memory bounded), it is necessary to use mixed-precision for different layers. Mixed-precision quantization is a powerful tool to enable memory and compute savings of neural network workloads by deploying different sets of bit-width precisions on separate compute operations.

Mixed-precision quantization of neural networks is a technique that is used to specify a heterogeneous set of computation precisions for different operations in the overall model architecture. This type of quantization enables higher precisions on more important layers and lower precisions on less important layers to improve the computation efficiency. Reducing computation precision is a powerful compression tool because whenever computation is performed on any hardware system, the precision of the computation needs to be specified.

Having this ability can be important for large DNN workloads with vast quantities of numerical operations on a collection of tensors. The effects of different levels of precision can be illustrated by performing computations with π, an irrational number with an infinite number of digits. Taking the mathematical constant π for example, in a "precision" (rounding) of 1: π=3; in "precision" of 2: π=3.1; "precision" of 4: π=3.142; "precision" of 8: π=3.1415927, and so on. Thus, assuming the same encoding protocol is used, more bit-widths (i.e., a larger number of bits) are required for a higher precision. Adjusting to lower precisions is advantageous for achieving faster computations and lower memory requirement, but with lower accuracy (e.g., 3^{∗}6=18 is easier to compute than 3.1415927^{∗}6=18.848556, but also less accurate). We can apply a similar, albeit more complex, process to lower the precisions of neural network architectures, which primarily consist of matrix operations.

In most cases, a neural network will be trained in 32-bit floating-point precision, known as fp32. Then lower precision values are quantized to achieve faster computation, lower power requirements, and lower memory when deploying the neural networks on actual hardware. Yet, finding effective mixed-precision quantization configurations is challenging given that the combinatorial search increases exponentially for each operation in the neural network.

Classical multi-objective search, for example, relies on a parameter-free approach. In a search requiring 100 different decisions, the algorithm directly outputs 100 different numbers. However, this representation approach may not be the best choice for every problem, particularly for neural networks architectures. Thus, improved technologies for mixed-precision quantization that can optimize multiple objectives are needed.

Embodiments of the present invention relate to a system that formulates layer-wise mixed-precision quantization of DNNs as a multi-objective search problem. In some embodiments, a graph-based embedding (e.g., sequential graphs) for DNN workloads are created and analyzed by using GNNs. For instance, each quantizable operation (for example, convolution or activation) in a DNN workload is represented by a node in a sequential graph of the DNN. GNNs are neural networks that efficiently process graph-based data by aggregating information across various neighborhoods in graph input data. The present invention includes a NEMO search framework used to train GNNs. The trained GNNs can be used for mixed-precision quantization of DNNs. For instance, a Pareto optimal set of solutions is found by using the NEMO search framework, followed by fine-tuning of a subset precision maps. By integrating GNNs into the NEMO search framework, neighborhood dependencies in the inherent graph-based structure of the DNN workloads can be exploited. A trained GNN can receive sequential graphs of DNNs an inputs and outputs layer-wise bit-widths of weights and activations, which can be used to perform mixed-precision quantization of the DNNs.

In an example of the present invention, a population for a NEMO search framework is generated. The population includes multiple species. Each species includes a number of members. Each member contains a configuration for the mixed-precision quantization problem and its resulting performance. The number indicates the size of the species. The size of the species can be algorithmically allocated through the NEMO search framework. The population may include GNN species having different architectures. In an embodiment, the population includes two GNN species: a species of graph convolutional network (GCN) and a species of Graph U-Nets. The members in each GNN species have different internal parameters. The population may also include other species, such as search species that search directly on bit-width. In other embodiments, the population may include fewer, more, or different species. A NEMO search process is performed on the population.

The NEMO search process is a process of training a GNN, i.e., determining the internal parameters of the GNN, which can be used to optimize multiple objectives of mixed-precision quantization. The multiple objectives include, for example, maximizing task performance, minimizing model size, minimizing compute complexity, other types of objects of mixed-precision quantization, or some combination thereof. In some embodiments, the NEMO search process includes one or more generations. A generation starts with each species producing offspring, which increases the number of members in each species. Next, utility metrics are computed to evaluate performances of the members against the objectives. A Pareto optimal set ("Pareto frontier") is identified from the utility metrics. Best performing members in each species are then selected as members for the next generation. The members that are not selected will not be used in the next generation. In the next generation, the members will produce new offspring, a new Pareto optimal set will be generated, and best performing members will be selected to generate another generation, and so on. The NEMO search process may stop when a criterion is met. The criterion may be the performance of one or more members or a threshold number of generations. The NEMO search process produces a GNN with trained internal parameters. The GNN may be a member that has the best performance, among all the members, in optimizing the objectives of mixed-precision quantization.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the context of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the context of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or system. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN Architecture

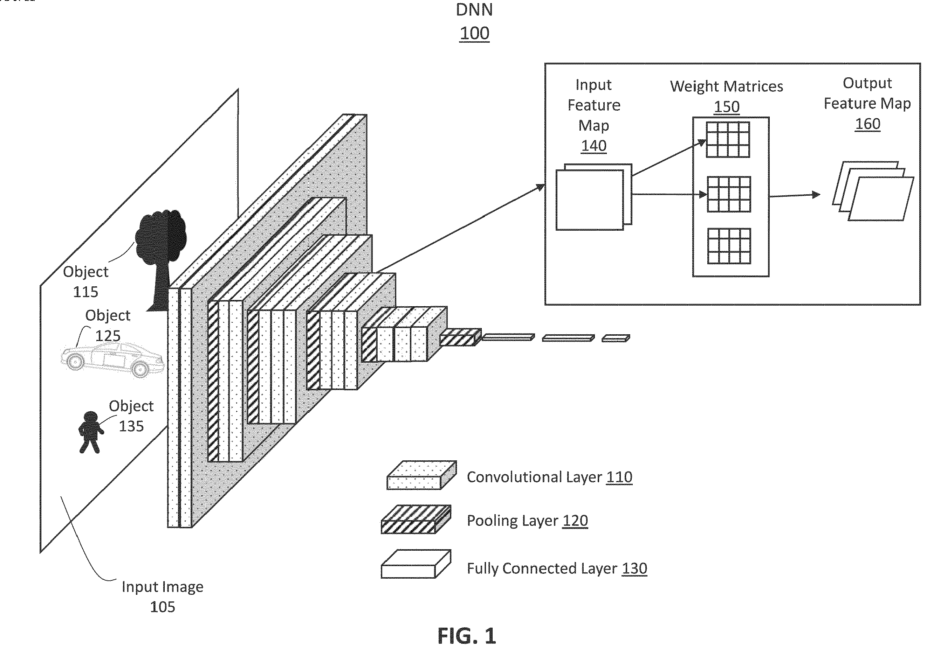

FIG. 1 illustrates an architecture of an example DNN 100, in accordance with various embodiments. For purpose of illustration, the DNN 100 in FIG. 1 is a Visual Geometry Group (VGG)-based convolutional neural network (CNN). In other embodiments, the DNN 100 may be other types of DNNs. The DNN 100 is trained to receive images and output classifications of objects in the images. In the embodiment of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers.

The convolutional layers 110 summarize the presence of features in the input image 105. The convolutional layers 110 function as feature extractors. The first layer of the DNN 100 is a convolutional layer 110. In an example, a convolutional layer 110 performs a convolution to an input feature map (IFM) 140 by using weight matrices 150, generates an output feature map (OFM) 160 from the convolution, and passes the OFM 160 to the next layer in the sequence. The IFM 140 may include a plurality of IFM matrices. The OFM 160 may include a plurality of OFM matrices. For the first convolutional layer 110, which is also the first layer of the DNN 100, the IFM 140 is the input image 105. For the other convolutional layers, the IFM 140 may be an output of another convolutional layer 110 or an output of a pooling layer 120. The convolution is a linear operation that involves the multiplication of the weight matrices 150 with the IFM 140. A filter may be a 2-dimensional array of weights. Weights of the filters can be initialized and updated by backpropagation using gradient descent. The magnitudes of the weights of the filters can indicate importance of the weight matrices 150 in extracting features from the IFM 140. A filter can be smaller than the IFM 140.

The multiplication applied between a filter-sized patch of the IFM 140 and a filter may be a dot product. A dot product is the element-wise multiplication between the filter-sized patch of the IFM 140 and the corresponding filter, which is then summed, always resulting in a single value. Because it results in a single value, the operation is often referred to as the "scalar product." Using a filter smaller than the IFM 140 is intentional as it allows the same filter (set of weights) to be multiplied by the IFM 140 multiple times at different points on the IFM 140. Specifically, the filter is applied systematically to each overlapping part or filter-sized patch of the IFM 140, left to right, top to bottom. The result from multiplying the filter with the IFM 140 one time is a single value. As the filter is applied multiple times to the IFM 140, the multiplication result is a two-dimensional array of output values that represent a filtering of the IFM 140. As such, the 2-dimensional output array from this operation is referred to a "feature map."

In some embodiments, the OFM 160 is passed through an activation function. An example activation function is the rectified linear activation function (ReLU). ReLU is a calculation that returns the value provided as input directly, or the value 0 if the input is 0 or less. The convolutional layer 110 may receive several images as input and calculates the convolution of each of them with each of the filters. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new filters and generates a new feature map. The new feature map may also be normalized and resized. The new feature map can be filtered again by a further subsequent convolutional layer 110, and so on.

In some embodiments, a convolutional layer 110 has four hyperparameters: the number of filters, the size F filters (e.g., a filter is of dimensions FxFxD pixels), the S step with which the window corresponding to the filter is dragged on the image (e.g., a step of 1 means moving the window one pixel at a time), and the zero-padding P (e.g., adding a black contour of P pixels thickness to the input image of the convolutional layer 110). The convolutional layers 110 may perform various types of convolutions, such as 2-dimensiontal convolution, dilated or atrous convolution, spatial separable convolution, depth wise separable convolution, transposed convolution, and so on. The DNN 100 includes 16 convolutional layers 110. In other embodiments, the DNN 100 may include a different number of convolutional layers.

The pooling layers 120 downsample feature maps generated by the convolutional layers, e.g., by summarizing the presents of features in the patches of the feature maps. A pooling layer 120 is placed between two convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2x2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6x6 results in an output pooled feature map of 3x3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receives an input vector. The input vector defines the output of the convolutional layers 110 and pooling layers 120 and includes the values of the last feature map generated by the last pooling layer 120 in the sequence. The fully connected layers 130 applies a linear combination and an activation function to the input vector and generates an output vector. The output vector may contain as many elements as there are classes: element i represents the probability that the image belongs to class i. Each element is therefore between 0 and 1, and the sum of all is worth 1. These probabilities are calculated by the last fully connected layer 130 by using a logistic function (binary classification) or a softmax function (multi-class classification) as an activation function.

In some embodiments, the fully connected layers 130 classify the input image 105 and returns a vector of size N, where N is the number of classes in the image classification problem. In the embodiment of FIG. 1, N equals 3, as there are three objects 115, 125, and 135 in the input image. Each element of the vector indicates the probability for the input image 105 to belong to a class. To calculate the probabilities, the fully connected layers 130 multiply each input element by weight, makes the sum, and then applies an activation function (e.g., logistic if N=2, softmax if N>2). This is equivalent to multiplying the input vector by the matrix containing the weights. In an example, the output vector includes three probabilities: a first probability indicating the object 115 being a tree, a second probability indicating the object 125 being a car, and a third probability indicating the object 135 being a person. In other embodiments where the input image 105 includes different objects or a different number of objects, the output vector can be different.

### Example DL Environment

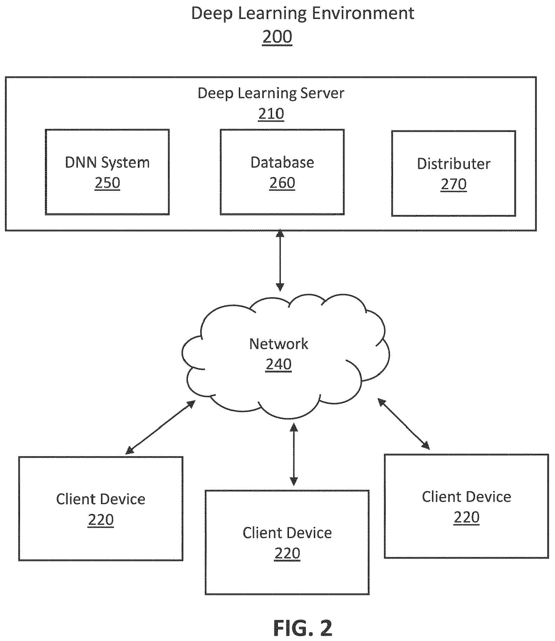

FIG. 2 illustrates a DL environment 200, in accordance with various embodiments. The DL environment 200 includes a DL server 210 and a plurality of client devices 220 (individually referred to as client device 220). The DL server 210 is connected to the client devices 220 through a network 240. In other embodiments, the DL environment 200 may include fewer, more, or different components.

The DL server 210 trains DL models using neural networks. A neural network is structured like the human brain and consists of artificial neurons, also known as nodes. These nodes are stacked next to each other in three types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The DL server 210 can use various types of neural networks, such as DNN, recurrent neural network (RNN), generative adversarial network (GAN), long short term memory network (LSTMN), and so on. During the process of training the DL models, the neural networks use unknown elements in the input distribution to extract features, group objects, and discover useful data patterns. The DL models can be used to solve various problems, e.g., making predictions, classifying images, and so on. The DL server 210 may build DL models specific to particular types of problems that need to be solved. A DL model is trained to receive an input and outputs the solution to the particular problem.

In FIG. 2, the DL server 210 includes a DNN system 250, a database 260, and a distributer 270. The DNN system 250 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. The DNN system also compresses the trained DNNs to reduce the sizes of the trained DNNs. As the compressed DNNs has a smaller size, application of the compressed DNNs requires less time and computing resources (e.g., memory, processor, etc.) compared with uncompressed DNNs. The compressed DNNs may be used on low memory systems, like mobile phones, IOT edge devices, and so on.

The database 260 stores data received, used, generated, or otherwise associated with the DL server 210. For example, the database 260 stores a training dataset that the DNN system 250 uses to train DNNs. As another example, the database 260 stores hyperparameters of the neural networks built by the DL server 210.

The distributer 270 distributes DL models generated by the DL server 210 to the client devices 220. In some embodiments, the distributer 270 receives a request for a DNN from a client device 220 through the network 240. The request may include a description of a problem that the client device 220 needs to solve. The request may also include information of the client device 220, such as information describing available computing resource on the client device. The information describing available computing resource on the client device 220 can be information indicating network bandwidth, information indicating available memory size, information indicating processing power of the client device 220, and so on. In an embodiment, the distributer may instruct the DNN system 250 to generate a DNN in accordance with the request. The DNN system 250 may generate a DNN based on the description of the problem. Alternatively or additionally, the DNN system 250 may compress a DNN based on the information describing available computing resource on the client device.

In another embodiment, the distributer 270 may select the DNN from a group of pre-existing DNNs based on the request. The distributer 270 may select a DNN for a particular client device 230 based on the size of the DNN and available resources of the client device 230. In embodiments where the distributer 270 determines that the client device 230 has limited memory or processing power, the distributer 270 may select a compressed DNN for the client device 230, as opposed to an uncompressed DNN that has a larger size. The distributer 270 then transmits the DNN generated or selected for the client device 220 to the client device 220.

In some embodiments, the distributer 270 may receive feedback from the client device 220. For example, the distributer 270 receives new training data from the client device 220 and may send the new training data to the DNN system 250 for further training the DNN. As another example, the feedback includes an update of the available computer resource on the client device 220. The distributer 270 may send a different DNN to the client device 220 based on the update. For instance, after receiving the feedback indicating that the computing resources of the client device 220 have been reduced, the distributer 270 sends a DNN of a smaller size to the client device 220.

The client devices 220 receive DNNs from the distributer 270 and applies the DNNs to solve problems, e.g., to classify objects in images. In various embodiments, the client devices 220 input images into the DNNs and uses the output of the DNNs for various applications, e.g., visual reconstruction, augmented reality, robot localization and navigation, medical diagnosis, weather prediction, and so on. A client device 220 may be one or more computing devices capable of receiving user input as well as transmitting and/or receiving data via the network 240. In one embodiment, a client device 220 is a conventional computer system, such as a desktop or a laptop computer. Alternatively, a client device 220 may be a device having computer functionality, such as a personal digital assistant (PDA), a mobile telephone, a smartphone, an autonomous vehicle, or another suitable device. A client device 220 is configured to communicate via the network 240. In one embodiment, a client device 220 executes an application allowing a user of the client device 220 to interact with the DL server 210 (e.g., the distributer 270 of the DL server 210). The client device 220 may request DNNs or send feedback to the distributer 270 through the application. For example, a client device 220 executes a browser application to enable interaction between the client device 220 and the DL server 210 via the network 240. In another embodiment, a client device 220 interacts with the DL server 210 through an application programming interface (API) running on a native operating system of the client device 220, such as IOS^{®} or ANDROID^{™}.

In an embodiment, a client device 220 is an integrated computing device that operates as a standalone network-enabled device. For example, the client device 220 includes display, speakers, microphone, camera, and input device. In another embodiment, a client device 220 is a computing device for coupling to an external media device such as a television or other external display and/or audio output system. In this embodiment, the client device 220 may couple to the external media device via a wireless interface or wired interface (e.g., an HDMI cable) and may utilize various functions of the external media device such as its display, speakers, microphone, camera, and input devices. Here, the client device 220 may be configured to be compatible with a generic external media device that does not have specialized software, firmware, or hardware specifically for interacting with the client device 220.

The network 240 supports communications between the DL server 210 and client devices 220. The network 240 may comprise any combination of local area and/or wide area networks, using both wired and/or wireless communication systems. In one embodiment, the network 240 may use standard communications technologies and/or protocols. For example, the network 240 may include communication links using technologies such as Ethernet, 802.11, worldwide interoperability for microwave access (WiMAX), 3G, 4G, code division multiple access (CDMA), digital subscriber line (DSL), etc. Examples of networking protocols used for communicating via the network 240 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 240 may be represented using any suitable format, such as hypertext markup language (HTML) or extensible markup language (XML). In some embodiments, all or some of the communication links of the network 240 may be encrypted using any suitable technique or techniques.

### Example DNN System

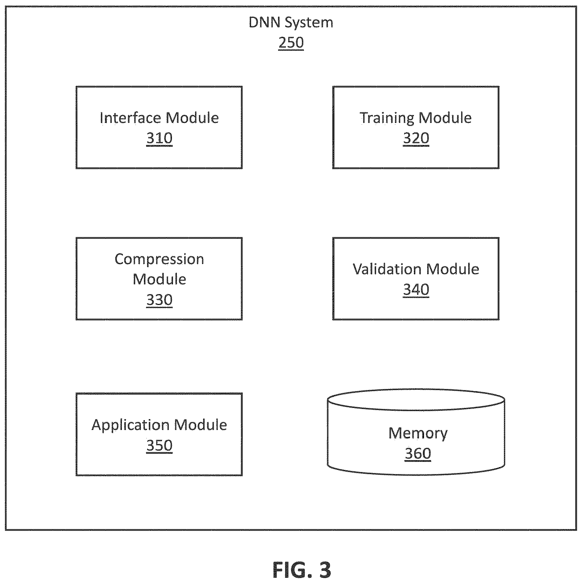

FIG. 3 is a block diagram of the DNN system 250, in accordance with various embodiments. The DNN system 250 trains and compresses DNNs. In other embodiments, the DNN system 250 can train or compress other types of deep neural networks, such as RNNs, and so on. The DNN system 250 can train and compress DNNs that can be used to recognize object in images. In other embodiments, the DNN system 250 can be applied to train DL models for other tasks, such as learning relationships between biological cells (e.g., DNA, proteins, etc.), control behaviors for devices (e.g., robots, machines, etc.), and so on. The DNN system 250 includes an interface module 310, a training module 320, a compression module 330, a validation module 340, an application module 350, and a memory 360. In other embodiments, alternative configurations, different or additional components may be included in the DNN system 250. Further, functionality attributed to a component of the DNN system 250 may be accomplished by a different component included in the DNN system 250 or a different system.

The interface module 310 facilitates communications of the DNN system 250 with other systems. For example, the interface module 310 establishes communications between the DNN system 250 with an external database to receive data that can be used to train DNNs or input into DNNs to perform tasks. As another example, the interface module 310 supports the DNN system 250 to distribute DNNs to other systems, e.g., computing devices configured to apply DNNs to perform tasks.

The training module 320 trains DNNs by using a training dataset. The training module 320 forms the training dataset. In an embodiment where the training module 320 trains a DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a tuning subset used by the compression module 330 to tune a compressed DNN or as a validation subset used by the validation module 340 to validate performance of a trained or compressed DNN. The portion of the training dataset not including the tuning subset and the validation subset may be used to train the DNN.

The training module 320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the DL algorithm works through the entire training dataset. One epoch means that each training sample in the training dataset has had an opportunity to update the parameters inside the DNN. An epoch may include one or more batches. The number of epochs may be 10, 100, 500, 1000, or even larger.

The training module 320 defines the architecture of the DNN, e.g., based on some of the hyperparameters. The architecture of the DNN includes an input layer, an output layer, and a plurality of hidden layers. The input layer of a DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as rectified liner unit (ReLU) layers, pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include three channels). A pooling layer is used to reduce the spatial volume of input image after convolution. It is used between two convolution layers. A fully connected layer involves weights, biases, and neurons. It connects neurons in one layer to neurons in another layer. It is used to classify images between different category by training.

The training module 320 inputs the training dataset into the DNN and modifies the parameters inside the DNN to minimize the error between the generated labels of objects in the training images and the training labels. The parameters include weights of filters in the convolutional layers of the DNN. In some embodiments, the training module 320 uses a cost function to minimize the error. After the training module 320 finishes the predetermined number of epochs, the training module 320 may stop updating the parameters in the DNN. The DNN having the updated parameters is referred to as a trained DNN.

The compression module 330 compresses trained DNNs to reduce complexity of the trained DNNs at the cost of small loss in model accuracy. The compression module 330 prunes filters in a trained DNN to compress the DNN. In some embodiments, the compression module 330 generates a sequential graph of the workload of a trained DNN. The sequential graph includes a sequence of nodes. Each graph represents a layer or activation in the DNN. The order of the nodes may be consistent with the order of the layers and activations in the DNN. Each graph includes features determined based on attributes of the corresponding layer or activation. The compression module 330 inputs the sequential graph into a GNN. The compression module 330 may also input an evaluation metric into the GNN. The GNN 430 generates graph groups, each of which includes one or more nodes. A graph group corresponds to a layer group that includes one or more layers represented by the nodes in the graph group. A graph group may also include one or more nodes representing one or more activations. Accordingly, a layer group may also include one or more activations. The GNN 430 also outputs a pruning ratio for each group.

The compression module 330 compress DNNs by reducing precisions of weights and activations. In some embodiments, the compression module 330 generates a sequential graph for a DNN. The sequential graph includes a sequence of nodes. Each node represents a quantizable operation in the DNN. A quantizable operation may be learnable or unlearnable. Example learnable quantizable operations include convolution (weights in convolution are trainable), operations in fully-connected layers, embeddings, and so on. Example unlearnable quantizable operations include activation, concat, batchnorm, and so on. A quantizable operation may be a convolution operation in a hidden layer of the DNN or an activation in the DNN. The compression module 330 provides the sequential graph as an input to a GNN. The GNN outputs bit- widths for each node. The compression module 330 uses the bit-widths of a node to quantize the weights or activations of the quantizable operation represented by the node. As the GNN outputs different bit-widths for different nodes, the precisions of weights and activations in different quantizable operations are different. Thus, the quantization process is a mixed-precision quantization process. The compression module 330 generates a compressed DNN with the quantized weights and activations. As the bit-widths of the weights and activations of the DNN are reduced, the compressed DNN has a smaller size than the original DNN. Also, less computation resources will be required for performing the quantized operations.

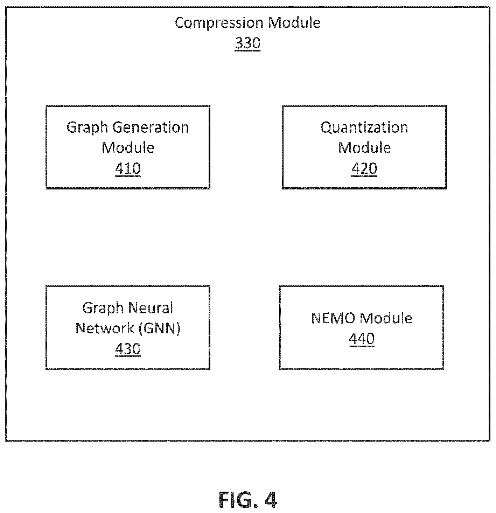

In some embodiments, the compression module 330 may compress DNNs using other compression methods in addition to mixed-precision quantization, such as filter pruning. The compression module 330 may also fine tune compressed DNNs. For instance, the compression module 330 uses the training dataset, or a subset of the training dataset, to train the compressed DNN. As the compressed DNN is converted from the pre-trained DNN, the fine-tuning process is a re-training process. In some embodiments, the compression module 330 retrains a compressed DNN by using the same training dataset that the training module 320 used to train the pre-trained DNN. The compression module 330 may re-train the compressed DNN for a smaller number of epochs than the number of epochs used by the training module 320 to train the pre-trained DNN. In some embodiments, the compression module 330 may use a different training dataset to re-train the compressed DNN. The re-training process can allow the network to holistically calibrate the new compressed tensors. More details about the compression module 330 are described below in conjunction with FIG. 4.

The validation module 340 verifies accuracy of trained or compressed DNN. In some embodiments, the validation module 340 inputs samples in a validation dataset into the DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 340 determines may determine an accuracy score measuring the precision, recall, or a combination of precision and recall of the DNN. The validation module 340 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 ^{∗} PR / (P + R)) unifies precision and recall into a single measure.

The validation module 340 may compare the accuracy score with a threshold score. In an example where the validation module 340 determines that the accuracy score of the augmented model is lower than the threshold score, the validation module 340 instructs the training module 320 or the compression module 330 to re-train the DNN. In one embodiment, the training module 320 or the compression module 330 may iteratively re-train the DNN until the occurrence of a stopping condition, such as the accuracy measurement indication that the DNN may be sufficiently accurate, or a number of training rounds having taken place.

In some embodiments, the validation module 340 instructs the compression module 330 to compress DNNs. For example, the validation module 340 may determine whether an accuracy score of a compressed DNN is above a threshold score. In response to determining that the accuracy score of a compressed DNN is above a threshold score, the validation module 340 instructs the compression module 330 to further compress the DNN, e.g., by compressing an uncompressed convolutional layer in the DNN. In an embodiment, the validation module 340 may determine a compression rate based on the accuracy score and instructs the compression module 330 to further compress the DNN based on the compression rate. The compression rate, e.g., is a percentage indicating the reduced size of the DNN from compression.

The application module 350 applies the trained or compressed DNN to perform tasks. For instance, the application module 350 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the application module 350 distributes the DNN to other systems, e.g., computing devices in communication with the DNN system 250, for the other systems to apply the DNN to perform the tasks.

The memory 360 stores data received, generated, used, or otherwise associated with the DNN system 250. For example, the memory 360 stores the datasets used by the training module 320, compression module 330, and the validation module 340. The memory 360 may also store data generated by the training module 320, compression module 330, and the validation module 340, such as the hyperparameters for training DNNs, algorithms for compressing DNNs, etc. The memory 360 may further store DNNs generated by the training module 320 and the compression module 330. In the embodiment of FIG. 1, the memory 360 is a component of the DNN system 250. In other embodiments, the memory 360 may be external to the DNN system 250 and communicate with the DNN system 250 through a network.

### Example Compression Module

FIG. 4 is a block diagram of the compression module 330, in accordance with various embodiments. In the embodiment of FIG. 4, the compression module 330 includes a graph generation module 410, a quantization module 420, a GNN 430, and a NEMO module 440. Further, functionality attributed to a component of the compression module 330 may be accomplished by a different component included in the compression module 330, a different module, or a different system.

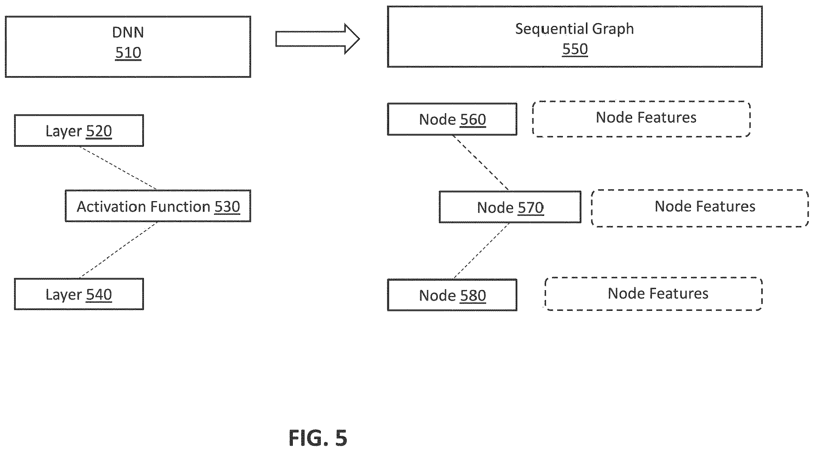

The graph generation module 410 generates sequential graphs of trained DNNs. In some embodiments, the graph generation module 410 identifies the hidden layers and activations in a trained DNN. For each hidden layer, the graph generation module 410 generates a graph representation ("node") representing the quantizable operation in the hidden layer. A quantizable operation is an operation that includes quantizable parameters. An example quantizable operation is a convolutional operation whose quantizable parameters are weights, as precisions of the weights can be quantized. The graph generation module 410 can also generate nodes representing activation functions between the hidden layers. As activation functions are quantizable operations whose quantizable parameters are activations. In some embodiments, a node has features that include a concatenation of a one-hot encoding of the corresponding quantizable operation and general features associated with the quantizable operation. Examples of the general features include input channel size of convolutional layer, output channel size of convolutional layer, input feature map size, number of input features for fully connected layer, kernel patch size for convolutional layer, number of learnable parameters in the layer, step size of convolution stride, feature indicating whether the layer is a depth wise-separable convolution layer, feature indicating whether the layer has parameters that require weight quantization, and so on. The graph generation module 410 also builds edges by connecting the nodes sequentially. The order of the nodes matches the order of the quantizable operations in the DNN. More information about sequential graph is described below in conjunction with FIG. 5.

The quantization module 420 quantizes weights and activations by using the GNN 430. The quantization module 420 receives sequential graphs from the graph generation module 410 and provides the sequential graphs to the GNN 430. The quantization module 420 receives outputs of the GNN 430 and quantizes weights and activations based on the outputs of the GNN 430. In an embodiment, an output of the GNN 430 includes bit-width probabilities for each node. The bit-width probabilities include a probability for each bit-width in a group of bit-widths. In an example, the GNN 430 outputs four probabilities for four bit-widths. The quantization module 420 selects a bit-width from the group based on the probabilities. For instance, the quantization module 420 selects the bit-width having the highest probability in the group as the bit-width for the quantizable operation represented by node. Next, the quantization module 420 changes the quantizable parameters of the quantizable operation based on the bit-width. The bit-width defines the number of bits encoding a weight or activation and correlates to a target precision of the weight or activation. Thus, the quantization module 420 can reduce precisions of the weights or activations in the quantizable operation to the target precision based on the bit-width. The GNN 430 processes each node separately, so the bit-width probabilities for different nodes can be different, i.e., the target precisions of different quantizable operations can be different. Thus, the quantization module 420 performs mixed-precision quantization.

Further, the quantization module 420 is capable of mixed-precision quantization that optimizes multiple objectives of compressing DNNs. The multiple objectives include, for example, maximizing task performance (e.g., performance of the compressed DNN in carrying out a prediction task), minimizing model size, minimizing compute complexity, other types of objects of mixed-precision quantization, or some combination thereof. The multi-objective optimization of the mixed-precision quantization is achieved by training the GNN 430 through NEMO search.

The NEMO module 440 trains the GNN 430 by using a NEMO search framework. The NEMO module 440 generates a population of the NEMO search framework. The population includes a number of species, each of which includes a number of members. The total number of members in the population is the population size. The total number of members in a species is the size of the species. In an example, the NEMO module 440 generates a population having a size of nine that includes three species, each of which has a size of three. In other examples, the population or a species can have a different size. Also, different species can have different sizes.

Each member is a solution for optimizing multiple objectives of mixed-precision quantization. For instance, each member is configured to determine precisions of quantizable parameters of DNNs that can optimize multiple objectives of compressing the DNNs. In an embodiment, the population includes multiple GNN species having different quantizable operations, such as a species of GCN and a species of Graph U-Nets. In other embodiments, the population may include fewer, more, or different GNN species. The members in each GNN species have the same architecture of neurons but different internal parameters. Some of the internal parameters, e.g., weights, are determined/trained by the NEMO search framework. The population may also include other species, which may not be neural networks. In an embodiment, the population includes a search species that search directly on bit-width. In other embodiments, the population may include fewer, more, or different species.

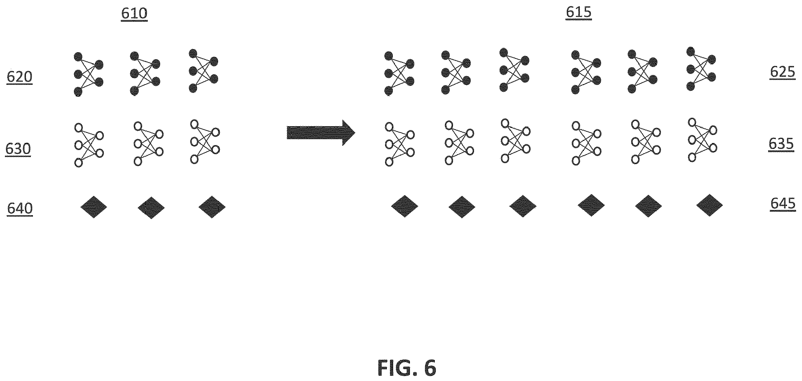

The NEMO module 440 performs a NEMO search process on the population. In some embodiments, the NEMO search process includes a sequence of generations. A generation may start with each species producing offspring, which increases the number of members in each species. For instance, the NEMO module 440 applies mutation and crossover operations on weights of individual layers of the members in a GNN species to generate new members for the GNN species. In an example, the crossover operation is an average of two randomly chosen layers in two GNNs in the GNN species. The mutation operation is the addition of Gaussian Noise to the weights of a randomly selected layer. For a search species, the NEMO module 440 may apply bounded simulated binary crossover and polynomial bounded mutation to produce offspring. After the offspring is produced, the size of each species increases. In an embodiment, the size of each species can be doubled. More details regarding offspring production are described below in conjunction with FIG. 6.

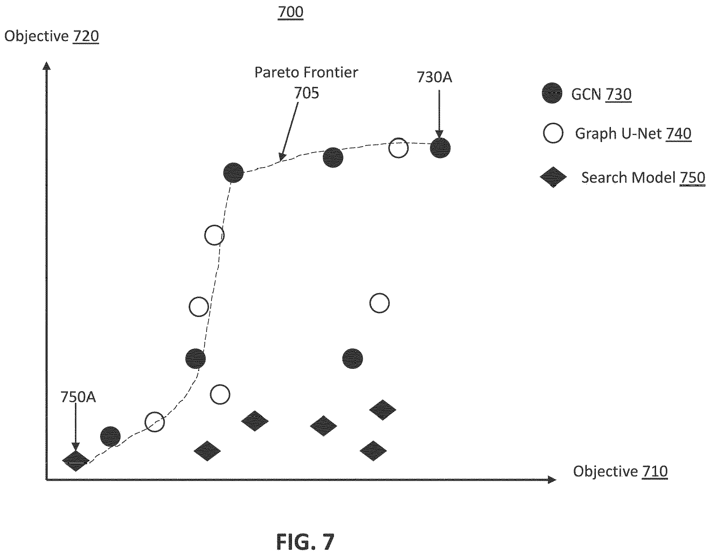

After offspring is produced, the NEMO module 440 computes utility metrics to evaluate performances of the members against the objectives. The NEMO module 440 identifies a Pareto optimal set ("Pareto frontier") that is identified from the utility metrics. Pareto optimality is a situation where no individual objective can be better off without making at least one individual objective worse off or without any loss thereof. For instance, the objective of maximizing task performance cannot be better off without making the objective of minimizing computing complexity worse off. The Pareto optimal set is the set of all Pareto efficient situations. The Pareto optimal set includes members that provides better solution for multi-objective optimization than the other members in the population. More details regarding Pareto frontier are described below in conjunction with FIG. 7.

The NEMO module 440 selects the members in the Pareto optimal set as members for the next generation. The members that are not selected will not be used in the next generation. In some embodiments, the NEMO module 440 may perform a fine-tuning process after the Pareto optimal set is formed. For instance, the Pareto optimal set may degrade the accuracy of the underlying workload (i.e., the DNN workload) due to aggressive quantization. To mitigate this degradation of accuracy, the NEMO module 440 may perform quantization-aware training on a subset of members in the Pareto frontier to improve their accuracy. The NEMO module 440 may maintain the same bit-widths, but fine tune internal parameters.

The NEMO module 440 repeats the offspring production, utility metrics evaluation, and member selection process in the next generation. The NEMO module 440 may finish the NEMO search process when a criterion is met. The criterion may be that a threshold performance has been achieved by a member in the last generation or that a threshold number of generations have been finished. The NEMO module 440 identifies a GNN from the last generation of the NEMO search process, e.g., the member having the best performance in the last generation, as the trained GNN. In some embodiments, the NEMO module 440 may train more than one GNNs in one NEMO search process. A NEMO search process may include one generation as opposed to a sequence of generations.

### Example Sequential Graph

FIG. 5 illustrates a sequential graph 550 of a DNN 510, in accordance with various embodiments. For purpose of simplicity and illustration, FIG. 5 shows two layers 520 and 540 of the DNN 510 and an activation function 530 between the two layers 520 and 540. In other embodiments, the DNN may include more layers or more activation functions. The layers 520 and 540 may be convolutional layers, each of which performs a convolutional operation. The convolutional operation includes weights, which are quantizable, i.e., the precision of the weights can be reduced to reduce the number of bits encoding the weights. The activation function 530 includes activations that are also quantizable. The layers 520 and 540 and the activation function 530 are connected and impact each other. For instance, the output of the layer 520 is provided to the activation function 530 as an input. The activation function converts the output of the layer 520 into the input to the layer 540.

The sequential graph 550 includes three nodes 560, 570, and 580. The node 560 represents the convolutional operation in the layer 520. The node 570 represents the activation function 530. The node 580 represents the convolutional operation in the layer 540. Each node includes node features. The node features of a node include a concatenation of a one-hot encoding of the corresponding quantizable operation. The node features may also include general features associated with the quantizable operation. Examples of the general features include input channel size of convolutional layer, output channel size of convolutional layer, input feature map size, number of input features for fully connected layer, kernel patch size for convolutional layer, number of learnable parameters in the layer, step size of convolution stride, feature indicating whether the layer is a depth wise-separable convolution layer, feature indicating whether the layer has parameters that require weight quantization, and so on. The nodes 560, 570, and 580 are connected sequentially in an order that matches the order of the layers 520 and 540 and activation function 530. In some embodiments, the sequential graph 550 is generated by the graph generation module 410 in FIG. 4.

### Example Offspring Production

FIG. 6 illustrates offspring production in a NEMO search process, in accordance with various embodiments. FIG. 6 shows a population 610 of the NEMO search process. The population includes three species 620, 630, and 640. Each species includes three members. In the embodiment of FIG. 6, the species 620 includes three GCNs that have the same architecture of neurons but different internal parameters. The species 630 includes three Graph U-Nets that have the same architecture of neurons but different internal parameters. The architecture of the GCNs is different from the architecture of the Graph U-Nets. The species 640 include three search models that do not have neural networks. In other embodiments, the population 610 may include fewer, more, or different members.

Mutation and crossover operations are performed on the weights of individual layers of the GNNs to generate new GNNs. As shown in FIG. 6, the three GCNs in the species 620 produce three new GCNs and the species 620 is changed to a new species 625 that includes the three GCNs in the species 620 and three new GCNs. The size of the species 625 is six. Similarly, the Graph U-Nets in the species 630 produces three new Graph U-Nets. The species 630 is changed to a new species 635 that includes the three Graph U-Nets in the species 630 and three new Graph U-Nets, i.e., six Graph U-Nets in total. For the species 640, a bounded simulated binary crossover and polynomial bounded mutation are applied on the three search models, which produce three new search models. After the offspring production, each species doubles its size. The population 610 is changed to the population 615, which includes 18 members, i.e., double the size of the population 610.

### Example Pareto Frontier

FIG. 7 illustrates an example Pareto frontier 705 in a criterion space 700, in accordance with various embodiments. The Pareto frontier 705 represents a measure of efficiency of two conflicting objectives 710 and 720. In an example, the objective 710 is maximizing task performance of a DNN and the objective 720 is minimizing compute complexity of the DNN. The Pareto frontier 705 may be formed based on the population 615 in FIG. 6. The criterion space 700 is constrained by the two objectives 710 and 720, which are represented by two axes in FIG. 7. The members of the population 615 are shown in the criterion space 700. The solid dots represent GCNs 730 in the species 625, the hollow dots represent Graph U-Nets 740 in the species 635, and the solid diamonds 750 represent the search models in the species 645.

Each member is a solution to optimize the two objectives 710 and 720. A position of a member in the feasible region indicates how well the solution achieves the two objectives 710 and 720. For instance, a member having a higher value for the objective 710 (i.e., a position more towards the right side of the axis of the objective 710) achieves the object 710 better, as the task performance is higher. A member having a lower value for the objective 720 (i.e., lower position along the axis of the objective 720) achieves the object 720 better, as the compute complexity is lower. A member that achieves both objectives 710 and 720 would be the solution to pick. However, there are multiple optimal solutions for each objective. The Pareto frontier 705 is formed to identify the optimal solutions.

In an embodiment, a member that has the highest value for the objective 710, which is a GCN 730A, is identified. Also, a member that has the lowest value for the objective 720, which is a search model 750A is identified. A line is drawn between the GCN 730A and search model 750A. The line is the Pareto frontier 705. The members on the Pareto frontier 705 are considered as a Pareto optimal solution. As the Pareto frontier 705 includes a set of Pareto optimal solutions, it is also referred to as Pareto optimal set. By moving along the Pareto frontier 705, the task performance can be maximized and the compute complexity can be minimized. The members off the Pareto frontier 705 are considered as solutions that fail to optimize the two objectives 710 and 720.

In an embodiment, a utility number can be determined for each species based on the Pareto frontier 705. The utility number is the number of members in the species that are on the Pareto frontier 705. For purpose of simplicity and illustration, in the embodiment of FIG. 7, the utility number of the species 625 is five, as there are five GCNs 730 on the Pareto frontier 705, versus the utility number of the species 635 is four and the utility number of the species 745 is 1. In other embodiments, the NEMO module 440 may perform other types of utility metrics.

### Example Formation of Next Generation Pareto Frontier

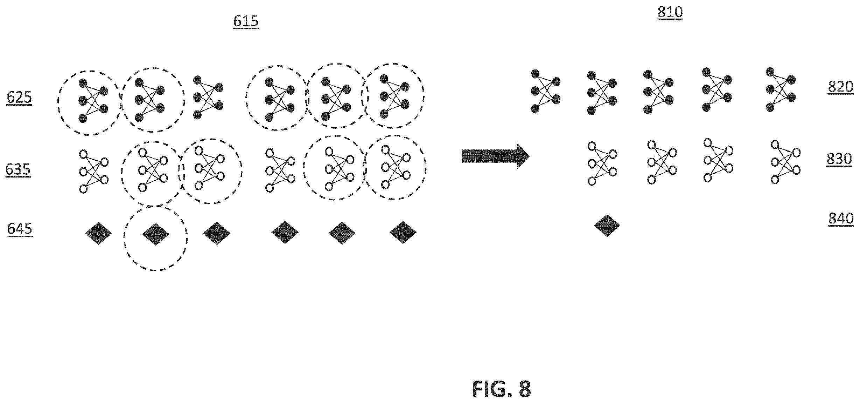

FIG. 8 illustrates formation of a new generation 810 in a NEMO search process, in accordance with various embodiments. The new generation 810 is formed based on the Pareto frontier 705. As described above, the Pareto frontier 705 includes give GCNs 730, four Graph U-Nets 740 and one search model. Accordingly, these 10 members on the Pareto frontier 705 (shown by the dotted circles in FIG. 8) are selected as members of the next generation 810. The other eight members will not be used in the next generation. Accordingly, the species 625 is downsized to the species 820, which includes five members. The species 635 is downsized to the species 830, which includes four members. The species 645 is downsized to the species 840, which includes one member. The new generation 810 can go through the offspring production process shown in FIG. 6 and the Pareto frontier formation process in FIG. 7 to form the next generation.

### Example Mixed-precision Quantization

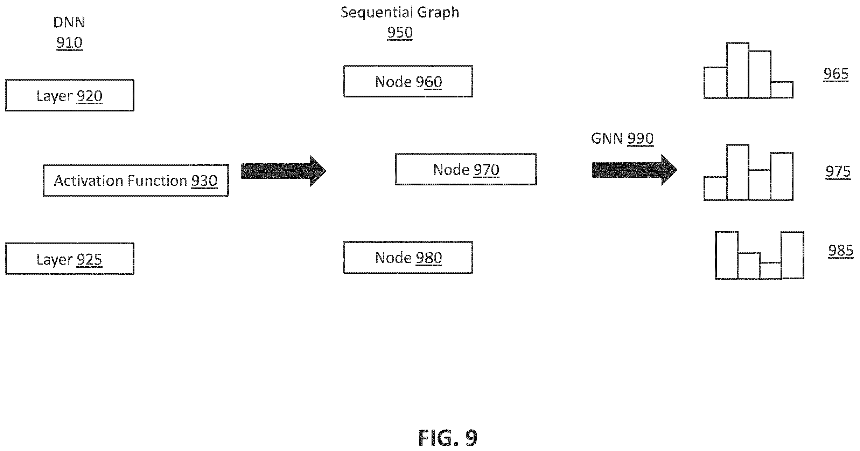

FIG. 9 illustrates a process of using a GNN 990 for mixed-precision quantization, in accordance with various embodiments. The GNN 990 is trained by a NEMO search process. FIG. 9 shows a DNN 910 that includes two layers 920 and 925 and an activation function 930 between the two layers 920 and 925. A sequential graph 950 is generated to represent quantizable operations in the DNN 910. The sequential graph 950 includes a node 960 representing a convolutional operation in the layer 920, a node 970 representing the activation function 930, and a node 980 representing a convolutional operation in the layer 940. The sequential graph 950 is input into the GNN 990. The GNN 990 outputs bit-width probability distributions 965, 975, and 985, each of which corresponds to one of the nodes 960, 970, and 980. In the embodiment of FIG. 9, each bit-width probability distribution includes four bit-widths, each of which is represented by a bar in the bit-width probability distribution. The height of the bar represents a probability of the corresponding bit-width. The probability may be a probability of optimizing multiple objectives of mixed-precision quantization of the DNN 910 if the bit-width is used to quantize the quantizable operation represented by the node. The bit-width having the highest probability may be selected to quantize the weights or activations of the quantizable operation represented by the node.

### Example Methods of Compressing DNN

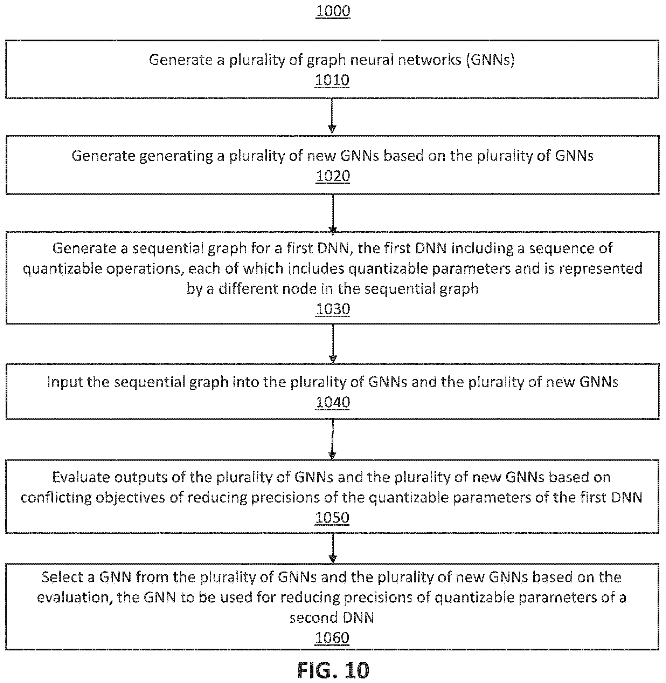

FIG. 10 is a flowchart showing a method of optimizing multiple objectives of mixed-precision quantization, in accordance with various embodiments. The method 1000 may be performed by the compression module 330 described above in conjunction with FIGS. 3 and 4. Although the method 1000 is described with reference to the flowchart illustrated in FIG. 10, many other methods of optimizing multiple objectives of mixed-precision quantization may alternatively be used. For example, the order of execution of the steps in FIG. 10 may be changed. As another example, some of the steps may be changed, eliminated, or combined.

The compression module 330 generates 1010 a plurality of GNNs. In some embodiments, the plurality of GNNs includes a first species of GNNs and a second species of GNNs. The GNNs in the first species have a first architecture of neurons. The GNNs in the second species have a second architecture of neurons that is different from the first architecture of neurons. The GNNs in the first GNN species have different internal parameters from each other. The GNNs in the second GNN species have different internal parameters from each other.

The compression module 330 generates 1020 a plurality of new GNNs based on the plurality of GNNs. For instance, the compression module 330 generates the plurality of new GNNs based on the plurality of GNNs by generating new internal parameters based on internal parameters of the plurality of GNNs. Then the compression module 330 forms the plurality of new GNNs based on the new internal parameters and an architecture of neurons of the plurality of GNNs.

The compression module 330 generates 1030 a sequential graph for a first DNN. The first DNN includes a sequence of quantizable operations. Each quantizable operation includes quantizable parameters and is represented by a different node in the sequential graph. A quantizable operation in the sequence is a convolution and the quantizable parameters of the quantizable operation include weights. Alternatively, a quantizable operation in the sequence is an activation function and the quantizable parameters of the quantizable operation include activations.

The compression module 330 inputs 1040 the sequential graph into the plurality of GNNs and the plurality of new GNNs. The compression module 330 evaluates 1050 outputs of the plurality of GNNs and the plurality of new GNNs based on conflicting objectives of reducing precisions of the quantizable parameters of the first DNN. In some embodiments, the compression module 330 generates a Pareto optimal set from the plurality of GNNs and the plurality of new GNNs based on performances of the plurality of GNNs and the plurality of new GNNs in achieving the conflicting objectives. The Pareto optimal set includes one or more GNNs in the plurality of GNNs and the plurality of new GNNs. The compression module 330 may form a criterion space constrained by the conflicting objectives and place the plurality of GNNs and the plurality of new GNNs in the criterion space. The compression module 330 identifies a GNN that has the best performance in achieving one of the conflicting objectives and another GNN that has the best performance in achieving another one of the conflicting objectives. The compression module 330 forms the Pareto optimal set by forming a curve connecting the two GNNs. The multiple objectives may be selected from a group consisting of, for example, maximizing task performance of the DNN, minimizing model size of the DNN, minimizing compute complexity of the DNN, other types of objects of mixed-precision quantization, or some combination thereof.

The compression module 330 selects 1060 a GNN from the plurality of GNNs and the plurality of new GNNs based on the evaluation. The GNN may be used for reducing precisions of quantizable parameters of a second DNN. In some embodiments, the GNN is configured to receive a sequential graph for the second DNN as an input and to output a bit-width probability distribution for each respective layer in the second DNN. The bit-width probability distribution includes a plurality of probabilities. Each of the plurality of probabilities corresponds to a different bit-width. The compression module 330 may select a bit-width from the bit-width probability distribution based on the plurality of probabilities and uses the selected bit-width to reduce precisions of quantizable parameters of the respective layer in the second DNN.

### Example Computing Device

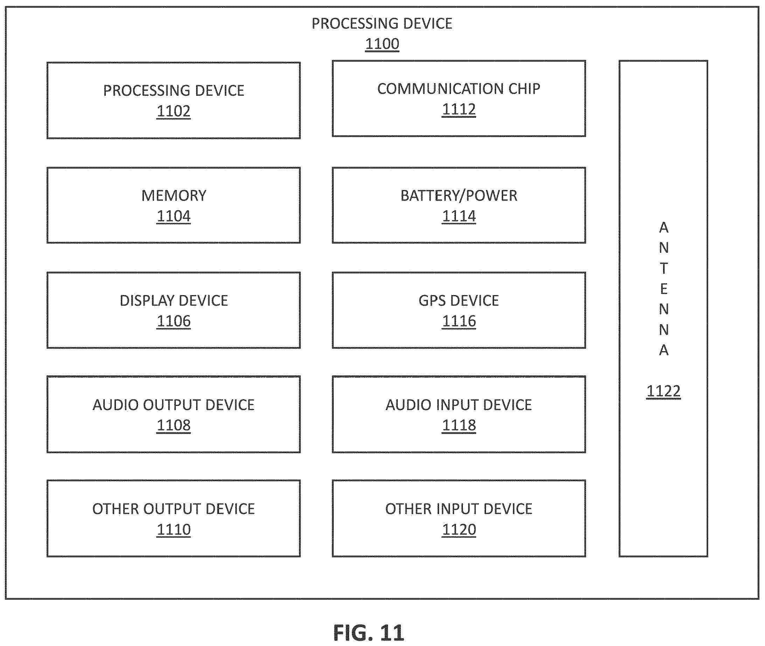

FIG. 11 is a block diagram of an example computing system for use as the DNN system 250, in accordance with various embodiments. A number of components are illustrated in FIG. 11 as included in the computing system 1100, but any one or more of these components may be omitted or duplicated, as suitable for the application. In some embodiments, some or all of the components included in the computing system 1100 may be attached to one or more motherboards. In some embodiments, some or all of these components are fabricated onto a single system on a chip (SoC) die. Additionally, in various embodiments, the computing system 1100 may not include one or more of the components illustrated in FIG. 11, but the computing system 1100 may include interface circuitry for coupling to the one or more components. For example, the computing system 1100 may not include a display device 1106, but may include display device interface circuitry (e.g., a connector and driver circuitry) to which a display device 1106 may be coupled. In another set of examples, the computing system 1100 may not include an audio input device 1118 or an audio output device 1108, but may include audio input or output device interface circuitry (e.g., connectors and supporting circuitry) to which an audio input device 1118 or audio output device 1108 may be coupled.

The computing system 1100 may include a processing device 1102 (e.g., one or more processing devices). As used herein, the term "processing device" or "processor" may refer to any device or portion of a device that processes electronic data from registers and/or memory to transform that electronic data into other electronic data that may be stored in registers and/or memory. The processing device 1102 may include one or more digital signal processors (DSPs), application-specific ICs (ASICs), central processing units (CPUs), graphics processing units (GPUs), cryptoprocessors (specialized processors that execute cryptographic algorithms within hardware), server processors, or any other suitable processing devices. The computing system 1100 may include a memory 1104, which may itself include one or more memory devices such as volatile memory (e.g., DRAM), nonvolatile memory (e.g., read-only memory (ROM)), flash memory, solid state memory, and/or a hard drive. In some embodiments, the memory 1104 may include memory that shares a die with the processing device 1102. In some embodiments, the memory 1104 includes one or more non-transitory computer-readable media storing instructions executable to perform operations for compressing a DNN, e.g., the method 1000 described above in conjunction with FIG. 10 or the operations performed by the compression module 330 described above in conjunction with FIGS. 3 and 4. The instructions stored in the one or more non-transitory computer-readable media may be executed by the processing device 1102.

In some embodiments, the computing system 1100 may include a communication chip 1112 (e.g., one or more communication chips). For example, the communication chip 1112 may be configured for managing wireless communications for the transfer of data to and from the computing system 1100. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1112 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication chip 1112 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1112 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1112 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1112 may operate in accordance with other wireless protocols in other embodiments. The computing system 1100 may include an antenna 1122 to facilitate wireless communications and/or to receive other wireless communications (such as AM or FM radio transmissions).

In some embodiments, the communication chip 1112 may manage wired communications, such as electrical, optical, or any other suitable communication protocols (e.g., the Ethernet). As noted above, the communication chip 1112 may include multiple communication chips. For instance, a first communication chip 1112 may be dedicated to shorter-range wireless communications such as Wi-Fi or Bluetooth, and a second communication chip 1112 may be dedicated to longer-range wireless communications such as global positioning system (GPS), EDGE, GPRS, CDMA, WiMAX, LTE, EV-DO, or others. In some embodiments, a first communication chip 1112 may be dedicated to wireless communications, and a second communication chip 1112 may be dedicated to wired communications.

The computing system 1100 may include battery/power circuitry 1114. The battery/power circuitry 1114 may include one or more energy storage devices (e.g., batteries or capacitors) and/or circuitry for coupling components of the computing system 1100 to an energy source separate from the computing system 1100 (e.g., AC line power).

The computing system 1100 may include a display device 1106 (or corresponding interface circuitry, as discussed above). The display device 1106 may include any visual indicators, such as a heads-up display, a computer monitor, a projector, a touchscreen display, a liquid crystal display (LCD), a light-emitting diode display, or a flat panel display, for example.

The computing system 1100 may include an audio output device 1108 (or corresponding interface circuitry, as discussed above). The audio output device 1108 may include any device that generates an audible indicator, such as speakers, headsets, or earbuds, for example.

The computing system 1100 may include an audio input device 1118 (or corresponding interface circuitry, as discussed above). The audio input device 1118 may include any device that generates a signal representative of a sound, such as microphones, microphone arrays, or digital instruments (e.g., instruments having a musical instrument digital interface (MIDI) output).

The computing system 1100 may include a GPS device 1116 (or corresponding interface circuitry, as discussed above). The GPS device 1116 may be in communication with a satellite-based system and may receive a location of the computing system 1100, as known in the art.

The computing system 1100 may include an other output device 1110 (or corresponding interface circuitry, as discussed above). Examples of the other output device 1110 may include an audio codec, a video codec, a printer, a wired or wireless transmitter for providing information to other devices, or an additional storage device.

The computing system 1100 may include an other input device 1120 (or corresponding interface circuitry, as discussed above). Examples of the other input device 1120 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing system 1100 may have any desired form factor, such as a handheld or mobile computing system (e.g., a cell phone, a smart phone, a mobile internet device, a music player, a tablet computer, a laptop computer, a netbook computer, an ultrabook computer, a PDA, an ultramobile personal computer, etc.), a desktop computing system, a server or other networked computing component, a printer, a scanner, a monitor, a set-top box, an entertainment control unit, a vehicle control unit, a digital camera, a digital video recorder, or a wearable computing system. In some embodiments, the computing system 1100 may be any other electronic device that processes data.

### Select Examples

The following paranodes provide various examples of the embodiments disclosed herein.

Example 1 provides a method for optimizing multiple objectives of mixed-precision quantization, the method including: generating a plurality of graph neural networks (GNNs); generating a plurality of new GNNs based on the plurality of GNNs; generating a sequential graph for a first DNN, the first DNN including a sequence of quantizable operations, each of which includes quantizable parameters and is represented by a different node in the sequential graph; inputting the sequential graph into the plurality of GNNs and the plurality of new GNNs; evaluating outputs of the plurality of GNNs and the plurality of new GNNs based on conflicting objectives of reducing precisions of the quantizable parameters of the first DNN; and selecting a GNN from the plurality of GNNs and the plurality of new GNNs based on the evaluation, the GNN to be used for reducing precisions of quantizable parameters of a second DNN.

Example 2 provides the method of example 1, where the plurality of GNNs includes a first species of GNNs and a second species of GNNs, the GNNs in the first species have a first architecture of neurons, and the GNNs in the second species have a second architecture of neurons that is different from the first architecture of neurons.

Example 3 provides the method of example 2, where the GNNs in the first GNN species have different internal parameters.

Example 4 provides the method of example 1, where generating the plurality of new GNNs based on the plurality of GNNs includes: generating new internal parameters based on internal parameters of the plurality of GNNs; and forming the plurality of new GNNs based on the new internal parameters and an architecture of neurons of the plurality of GNNs.

Example 5 provides the method of example 1, where evaluating outputs of the plurality of GNNs and the plurality of new GNNs includes: generating a Pareto optimal set from the plurality of GNNs and the plurality of new GNNs based on performances of the plurality of GNNs and the plurality of new GNNs in achieving the conflicting objectives, where the Pareto optimal set includes one or more GNNs in the plurality of GNNs and the plurality of new GNNs.

Example 6 provides the method of example 1, where the GNN is configured to receive a sequential graph for the second DNN as an input and to output a bit-width probability distribution for each respective layer in the second DNN, the bit-width probability distribution including a plurality of probabilities, and each of the plurality of probabilities corresponds to a different bit-width.

Example 7 provides the method of example 6, where a bit-width is to be selected from the bit-width probability distribution based on the plurality of probabilities and the bit-width is to be used to reduce precisions of quantizable parameters of the respective layer in the second DNN.

Example 8 provides the method of example 1, where a quantizable operation in the sequence comprises a convolution and the quantizable parameters of the quantizable operation include weights.

Example 9 provides the method of example 1, where a quantizable operation in the sequence comprises an activation function and the quantizable parameters of the quantizable operation include activations.

Example 10 provides the method of example 1, where the multiple objectives are selected from a group consisting of maximizing task performance of the DNN, minimizing model size of the DNN, and minimizing compute complexity of the DNN.

Example 11. One or more non-transitory computer-readable media storing instructions executable to perform operations for optimizing multiple objectives of mixed-precision quantization, the operations including: generating a plurality of graph neural networks (GNNs); generating a plurality of new GNNs based on the plurality of GNNs; generating a sequential graph for a first DNN, the first DNN including a sequence of quantizable operations, each of which includes quantizable parameters and is represented by a different node in the sequential graph; inputting the sequential graph into the plurality of GNNs and the plurality of new GNNs; evaluating outputs of the plurality of GNNs and the plurality of new GNNs based on conflicting objectives of reducing precisions of the quantizable parameters of the first DNN; and selecting a GNN from the plurality of GNNs and the plurality of new GNNs based on the evaluation, the GNN to be used for reducing precisions of quantizable parameters of a second DNN.

Example 12 provides the one or more non-transitory computer-readable media of example 11, where the plurality of GNNs includes a first species of GNNs and a second species of GNNs, the GNNs in the first species have a first architecture of neurons, and the GNNs in the second species have a second architecture of neurons that is different from the first architecture of neurons.

Example 13 provides the one or more non-transitory computer-readable media of example 12, where the GNNs in the first GNN species have different internal parameters.

Example 14 provides the one or more non-transitory computer-readable media of example 11, where generating the plurality of new GNNs based on the plurality of GNNs includes: generating new internal parameters based on internal parameters of the plurality of GNNs; and forming the plurality of new GNNs based on the new internal parameters and an architecture of neurons of the plurality of GNNs.

Example 15 provides the one or more non-transitory computer-readable media of example 11, where evaluating outputs of the plurality of GNNs and the plurality of new GNNs includes: generating a Pareto optimal set from the plurality of GNNs and the plurality of new GNNs based on performances of the plurality of GNNs and the plurality of new GNNs in achieving the conflicting objectives, where the Pareto optimal set includes one or more GNNs in the plurality of GNNs and the plurality of new GNNs.

Example 16 provides the one or more non-transitory computer-readable media of example 11, where the GNN is configured to receive a sequential graph for the second DNN as an input and to output a bit-width probability distribution for each respective layer in the second DNN, the bit-width probability distribution including a plurality of probabilities, and each of the plurality of probabilities corresponds to a different bit-width.

Example 17 provides the one or more non-transitory computer-readable media of example 16, where a bit-width is to be selected from the bit-width probability distribution based on the plurality of probabilities and the bit-width is to be used to reduce precisions of quantizable parameters of the respective layer in the second DNN.

Example 18 provides the one or more non-transitory computer-readable media of example 11, where a quantizable operation in the sequence comprises a convolution and the quantizable parameters of the quantizable operation include weights.

Example 19 provides the one or more non-transitory computer-readable media of example 11, where a quantizable operation in the sequence comprises an activation function and the quantizable parameters of the quantizable operation include activations.

Example 20 provides the one or more non-transitory computer-readable media of example 11, where the multiple objectives are selected from a group consisting of maximizing task performance of the DNN, minimizing model size of the DNN, and minimizing compute complexity of the DNN.

Example 21 provides an apparatus for optimizing multiple objectives of mixed-precision quantization, the apparatus including: a computer processor for executing computer program instructions; and a non-transitory computer-readable memory storing computer program instructions executable by the computer processor to perform operations including: generating a plurality of graph neural networks (GNNs), generating a plurality of new GNNs based on the plurality of GNNs, generating a sequential graph for a first DNN, the first DNN including a sequence of quantizable operations, each of which includes quantizable parameters and is represented by a different node in the sequential graph, inputting the sequential graph into the plurality of GNNs and the plurality of new GNNs, evaluating outputs of the plurality of GNNs and the plurality of new GNNs based on conflicting objectives of reducing precisions of the quantizable parameters of the first DNN, and selecting a GNN from the plurality of GNNs and the plurality of new GNNs based on the evaluation, the GNN to be used for reducing precisions of quantizable parameters of a second DNN.

Example 22 provides the apparatus of example 21, where the plurality of GNNs includes a first species of GNNs and a second species of GNNs, the GNNs in the first species have a first architecture of neurons, and the GNNs in the second species have a second architecture of neurons that is different from the first architecture of neurons.

Example 23 provides the apparatus of example 21, where generating the plurality of new GNNs based on the plurality of GNNs includes: generating new internal parameters based on internal parameters of the plurality of GNNs; and forming the plurality of new GNNs based on the new internal parameters and an architecture of neurons of the plurality of GNNs.

Example 24 provides the apparatus of example 21, where evaluating outputs of the plurality of GNNs and the plurality of new GNNs includes: generating a Pareto optimal set from the plurality of GNNs and the plurality of new GNNs based on performances of the plurality of GNNs and the plurality of new GNNs in achieving the conflicting objectives, where the Pareto optimal set includes one or more GNNs in the plurality of GNNs and the plurality of new GNNs.

Example 25 provides the apparatus of example 21, where the GNN is configured to receive a sequential graph for the second DNN as an input and to output a bit-width probability distribution for each respective layer in the second DNN, the bit-width probability distribution including a plurality of probabilities, and each of the plurality of probabilities corresponds to a different bit-width.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method for optimizing multiple objectives of mixed-precision quantization, the method comprising:
generating a plurality of graph neural networks (GNNs);
generating a plurality of new GNNs based on the plurality of GNNs;
generating a sequential graph for a first DNN, the first DNN comprising a sequence of quantizable operations, each of which includes quantizable parameters and is represented by a different node in the sequential graph;
inputting the sequential graph into the plurality of GNNs and the plurality of new GNNs;
evaluating outputs of the plurality of GNNs and the plurality of new GNNs based on conflicting objectives of reducing precisions of the quantizable parameters of the first DNN; and
selecting a GNN from the plurality of GNNs and the plurality of new GNNs based on the evaluation, the GNN to be used for reducing precisions of quantizable parameters of a second DNN.

2. The method of claim 1, wherein the plurality of GNNs comprises a first species of GNNs and a second species of GNNs, the GNNs in the first species have a first architecture of neurons, and the GNNs in the second species have a second architecture of neurons that is different from the first architecture of neurons.

3. The method of claim 2, wherein the GNNs in the first GNN species have different internal parameters.

4. The method of any of the preceding claims, wherein generating the plurality of new GNNs based on the plurality of GNNs comprises:
generating new internal parameters based on internal parameters of the plurality of GNNs; and
forming the plurality of new GNNs based on the new internal parameters and an architecture of neurons of the plurality of GNNs.

5. The method of any of the preceding claims, wherein evaluating outputs of the plurality of GNNs and the plurality of new GNNs comprises:
generating a Pareto optimal set from the plurality of GNNs and the plurality of new GNNs based on performances of the plurality of GNNs and the plurality of new GNNs in achieving the conflicting objectives,
wherein the Pareto optimal set comprises one or more GNNs in the plurality of GNNs and the plurality of new GNNs.

6. The method of any of the preceding claims, wherein the GNN is configured to receive a sequential graph for the second DNN as an input and to output a bit-width probability distribution for each respective layer in the second DNN, the bit-width probability distribution comprising a plurality of probabilities, and each of the plurality of probabilities corresponds to a different bit-width.

7. The method of claim 6, wherein a bit-width is to be selected from the bit-width probability distribution based on the plurality of probabilities and the bit-width is to be used to reduce precisions of quantizable parameters of the respective layer in the second DNN.

8. The method of any of the preceding claims, wherein a quantizable operation in the sequence comprises a convolution and the quantizable parameters of the quantizable operation comprise weights.

9. The method of any of the preceding claims, wherein a quantizable operation in the sequence comprises an activation function and the quantizable parameters of the quantizable operation comprise activations.

10. The method of any of the preceding claims, wherein the multiple objectives are selected from a group consisting of maximizing task performance of the DNN, minimizing model size of the DNN, and minimizing compute complexity of the DNN.

11. One or more non-transitory computer-readable media storing instructions executable to perform the method of any of the preceding claims.

12. An apparatus for optimizing multiple objectives of mixed-precision quantization, the apparatus comprising:
a computer processor for executing computer program instructions; and
a non-transitory computer-readable memory storing computer program instructions executable by the computer processor to perform operations comprising:
generating a plurality of graph neural networks (GNNs),
generating a plurality of new GNNs based on the plurality of GNNs,
generating a sequential graph for a first DNN, the first DNN comprising a sequence of quantizable operations, each of which includes quantizable parameters and is represented by a different node in the sequential graph,
inputting the sequential graph into the plurality of GNNs and the plurality of new GNNs,
evaluating outputs of the plurality of GNNs and the plurality of new GNNs based on conflicting objectives of reducing precisions of the quantizable parameters of the first DNN, and
selecting a GNN from the plurality of GNNs and the plurality of new GNNs based on the evaluation, the GNN to be used for reducing precisions of quantizable parameters of a second DNN.

13. The apparatus of claim 12, wherein the plurality of GNNs comprises a first species of GNNs and a second species of GNNs, the GNNs in the first species have a first architecture of neurons, and the GNNs in the second species have a second architecture of neurons that is different from the first architecture of neurons.

14. The apparatus of claim 12 or 13, wherein:
generating the plurality of new GNNs based on the plurality of GNNs comprises:
generating new internal parameters based on internal parameters of the plurality of GNNs, and
forming the plurality of new GNNs based on the new internal parameters and an architecture of neurons of the plurality of GNNs; or
evaluating outputs of the plurality of GNNs and the plurality of new GNNs comprises:
generating a Pareto optimal set from the plurality of GNNs and the plurality of new GNNs based on performances of the plurality of GNNs and the plurality of new GNNs in achieving the conflicting objectives, wherein the Pareto optimal set comprises one or more GNNs in the plurality of GNNs and the plurality of new GNNs.

15. The apparatus of any one of claims 12-14, wherein the GNN is configured to receive a sequential graph for the second DNN as an input and to output a bit-width probability distribution for each respective layer in the second DNN, the bit-width probability distribution comprising a plurality of probabilities, and each of the plurality of probabilities corresponds to a different bit-width.
